# EUROPÄISCHE PATENTSCHRIFT

(11) **EP 1 948 421 B1**
(45) Veröffentlichungstag und Bekanntmachung des Hinweises auf die Patenterteilung: **16.05.2012**
(21) Anmeldenummer: 06793690.6
(22) Anmeldetag: 21.09.2006
(51) Int. Cl.: B29C 51/30, B29C 35/08

(54) **VERFAHREN ZUR HERSTELLUNG VON GENARBTEN KUNSTSTOFF-FORMTEILEN**
METHOD FOR PRODUCING GRAINED PLASTIC MOULDINGS
PROCÉDÉ DE FABRICATION D'ARTICLES MOULÉS GRAINÉS EN PLASTIQUE

(30) Priorität: 27.10.2005 DE 102005051392
(43) Veröffentlichungstag der Anmeldung: 30.07.2008
(73) Patentinhaber: Benecke-Kaliko AG, 30419 Hannover (DE)
(72) Erfinder: BÜHRING, Jürgen, 30900 Wedemark (DE); HÜLSEWEDE, Volker, 73114 Schlat (DE)
(74) Vertreter: Finger, Karsten
(86) Internationale Anmeldenummer: PCT/EP2006/066564
(87) Internationale Veröffentlichungsnummer: WO 2007/048662

(56) Entgegenhaltungen:
- EP-A- 1 538 175
- EP-A1- 1 149 858
- DE-A1- 3 714 365
- DE-A1- 4 007 876
- DE-A1- 4 007 878
- DE-C1- 3 528 810

## Beschreibung

Die Erfindung betrifft ein Verfahren gemäß dem Anspruch 1 zur Herstellung von warmformbaren und werkzeugfallenden Kunststoff-Formteilen mit einer dreidimensionalen Oberflächenstruktur, insbesondere von Polymer-Formhäuten oder -Folien mit einer Narbung auf der Oberfläche nach dem Inmould-Graining-Verfahren, wobei das Kunststoff-Formteil vor dem Tiefziehen einer Vorwärmung bis auf eine Temperatur unterzogen wird, bei dem das Kunststoff-Formteil thermoplastisch verformbar wird, und bei dem das Kunststoff-Formteil, also insbesondere etwa eine Kunststoff-Folie danach mittels Unterdruck und/oder Formwerkzeugen in/auf eine Negativform gepresst wird, wobei die Oberfläche der Negativform das Negativ der aufzubringenden dreidimensionalen Oberflächenstruktur beinhaltet, wodurch das Kunststoff-Formteil sowohl die gewünschte bauteil-geometrische Form erhält als auch mit der gewünschten positiven Oberflächenstruktur geprägt wird. Ebenfalls wir ein derartiges Kunststoff-Formteil offenbart.

Im Stand der Technik sind Verfahren zur Herstellung von warmformbaren und werkzeugfallenden Kunststoff-Formteilen mit einer dreidimensionalen Oberflächenstruktur bekannt, insbesondere bei der Herstellung von Formhäuten, beispielsweise für Armaturenbretter von Kraftfahrzeugen. Hier sind verschiedene Sinter- oder Sprühverfahren zu nennen, bei denen ein oder mehrere flüssige oder pulverförmige Komponenten in eine Form gegeben werden und dort ausreagieren / aushärten, aber auch Verfahren zur Herstellung von Slush-Häuten durch Rotationssintern etc.

Im Bereich des Automobilinterieurs ist ein starker Trend zur Verbesserung der Qualitätsanmutung zu beobachten. Dieser Trend hat dazu geführt, dass viele typische Folienanwendungen im Dekorbereich durch werkzeugfallende Formhäute ersetzt wurden. Hierbei überzeugt insbesondere die Möglichkeit, die Oberflächenstruktur / -textur, d.h. die Oberfläche der Formhaut, also etwa das Erscheinungsbild einer Narbe, und die Geometrie des gesamten Bauteiles in einem einzigen Formprozess während der Herstellung festzulegen. Dazu wird zum Beispiel die Narbstruktur und Bauteilgeometrie als Negativ in eine Werkzeugform gebracht, die Formhaut durch Sinter- oder Sprühverfahren ausgeformt und danach entnommen. Nach einem anschließenden Hinterschäümprozess erhält man ein dreidimensionales Bauteil, dessen Narbstruktur dem der im Werkzeug eingebrachten Narbe entspricht. Das Hinterschäumen stellt hierbei nur eine Möglichkeit dar, für die Formhaut eine Trägerstruktur zu bilden. Gleichermaßen ist etwa das Aufkleben von Struktur-Trägerelementen aus hartem Kunststoff bekannt.

Die in diesen Sinter- und Sprühverfahren eingesetzten Materialien müssen, um eine gute Narbabbildung bieten zu können, entweder pulverförmig aufbereitet und gut rieselfähig sein oder als viskose Flüssigkeit vorliegen. Damit ergeben sich für viele Polymerklassen Grenzen hinsichtlich ihrer Einsetzbarkeit in diesen Verfahren. Dieses trifft insbesondere auch für die hochviskosen polyolefinischen Materialien zu.

Zudem sind die Fertigungskosten für die Herstellung der nach dem Spraymolding oder Pulversinterprozess hergestellten Formhäute verhältnismäßig hoch. Daher wird von einigen Herstellern von Türseitenteilen und Instrumententafeln in den letzten Jahren das "Inmould-Graining-Verfahren" vorangetreiben, welches sich als Spezialverfahren aus dem Negativ-Tiefziehverfahren entwickelt hat. Dieses Inmould-Graining-Verfahren, das bisher im Wesentlichen mit seinem englischsprachigen Begriff gekennzeichnet und bekannt wurde, lässt sich wohl am besten mit dem im Weiteren verwendeten Begriff " narbgebendes Negativtiefziehen" übersetzen.

Im Gegensatz zum Standardtiefziehveifahren, bei dem das Einformen in die dreidimensionale, bauteil-geometrische Struktur durch das Einfahren eines die spätere Bauteilkontur bildenden Tiefziehstempels in die Folie erfolgt, wird beim Negativtiefziehen eine Folie in eine Negativform hineingezogen, beispielsweise durch Vakuum. Das narbgebende Negativtiefziehen ist nun eine besondere Ausgestaltung des Negativtiefziehens, in dem nicht nur die bauteil-geometrische Struktur, sondern auch die spätere Narbstruktur als Negativ in die Werkzeugoberfläche eingebracht wird.

Die Anforderung an das Ausgangsmaterial sind beim Standardziehverfahren, beim Negativtiefziehverfahren und beim narbgebenden Negativtiefziehen dementsprechend unterschiedlich. Im Gegensatz zu dem Ausgangsmaterial für die beiden erst genannten Verfahren muss das der Werkzeugseite zugewandte Folienteil beim narbgebenden Negativtiefziehen niedrigviskos sein, um eine optimale Narbabbildung zu gewährleisten. Des Weiteren muss dieses Folienteil aber auch thermisch stabil sein, um die Alterungsanforderungen sowie die Forderungen hinsichtlich der thermischen Beständigkeit während des späteren Einsatzes zu erfüllen.

Beim narbgebenden Negativtiefziehen wird eine ungeprägte Folie erhitzt und dann mittels Vakuum in eine dreidimensionale Form gezogen, die das gewünschte Narbbild als Negativ enthält. Ein Problem bei den im Stand der Technik hierzu bekannten Verfahren besteht darin, die so genarbte Folie durch einen anschließende Verformungsprozess in ihre geometrische/bauteilgeometrische Form zu bringen, ohne dass das Narbbild verzogen wird.

Um im Rahmen des Oberflächen-Formziehennarbgebenden Negativtiefziehens eine gute Farbübertragung vom Werkzeug auf die als Ausgangsmaterial genutzte Kunststoff-Folie zu bekommen, ist es wichtig, dass im Bereich der Verarbeitungstemperatur, die typischerweise jenseits der Schmelzetemperatur der Rezepturkomponenten für die Folie liegt, die Materialviskosität möglichst gering ist. Damit wird gewährleistet, dass die Folienmasse gut in die Werkzeugkavitäten fließt. Hierzu wird die üblicherweise in Rollen vorliegende Folie abgerollt und unter leichtem Zug an einer geeigneten Heizeinrichtung vorbeigeführt.
Unter diesen Bedingungen wird aber die Folienstabilität häufig derart gering, dass die Folie während des Aufheizzyklus sich längt und merkbar durchhängt. Dies kann dazu führen, dass beim Einlegen der Folie in das Formwerkzeug eine z.B. erhöhte Anzahl an Falten am Bauteil oder vermehrt Dünnstellen in der Folie auftreten können.

Bei einer Verfahrensweise, bei dem das Formwerkzeug oberhalb der Folie angeordnet ist und die Folie durch ein zwischen Form und Folie angelegtes Vakuum angesaugt wird, kann ein zu großer Durchhang der Folie dazu führen, dass der Weg zum Anlegen an die narbgebende Form zu lang wird und die Folie dadurch zu stark auskühlt

Hierzu sind Herstellungsverfahren bekannt, wie sie etwa in der US 200310197302 A1 offenbart sind. Beschrieben ist hier eine Folienzusammensetzung für Formkörper, die prinzipiell auch nach dem narbgebenden Negativtiefziehen hergestellt werden sollen, wie dort beispielsweise auf der Seite 2, Nr. 0018 dargestellt. Beschrieben ist hier eine peroxidhaltige Folienzusammensetzung mit Polypropylen, Ethylen Copolymer und Polyethylen niedriger Dichte in verschiedenen prozentualen Zusammensetzungen, Die Vernetzung mittels der Peroxide wird angewendet um eine ausreichend hohe Viskosität zu erreichen.

Im Hinblick auf die Eignung einer solchen Folie für das narbgebende Negativtieiziehen ist aber die gleichmäßige Erstreckung der Vernetzung und Damit die hohe Viskosität über die gesamte Foliendicke nachteilig. Zumindest der Folienteil bzw. der Dickenbereich der Folie, der dem Werkzeug zugewandt ist, muss eher niedrigviskos sein, um eine gute Abformung der Oberflächenstruktur zu ermöglichen.

Die DE 3714365 A1 offenbart ein Verfahren gemäß dem Oberbegriff des Anspruchs 1 zur Herstellung von Formteilen oder Gegenständen aus thermoverformbaren Kunststoffolien der gattungsgemäßen Art, wobei die Kunststofffolien in einer Vorwärmstation vorgewärmt und durch ein Negativ-Ziehformverfahren unter Narbgebung thermoverformt werden, wobei unterschiedliche Materialien und Verfahrensweisen zum Einbringen/Einsaugen in die Form dargestellt sind.

Die EP 1149858 A1 offenbart ein Verfahren zur Herstellung einer Folie aus unvernetztem Polyolefin, die vor dem Tiefziehen einem Elektronenstrahlverfahren unterzogen wird und damit vernetzt wird.

Die DE 40 07 876 A1 offenbart ein Verfahren zum Herstellen geprägter Kunststoff-Formteile, bei dem zunächst die Oberflächenstruktur in einem Prägeverfahren hergestellt wird und danach die bauteil-geometrische Form tiefgezogen wird. Diesem Verfahren liegt als Ausgangsmaterial eine aus zwei unterschiedlichen Kunststoffschichten hergestellte Folie zugrunde. In deren Oberschicht wird mit entsprechenden Werkzeugen nachfolgend zunächst die Oberflächenstruktur eingeprägt. Diese Oberschicht unterscheidet sich von der Unterschicht dadurch, dass sie aus einem Kunststoff besteht, der sich nicht durch Elektronenstrahlen vemetzen lässt. Eine solche Elektronenstrahlvernetzung schließt sich nämlich bei dem hier offenbarten Verfahren dem Prägevorgang an, wodurch die untere Schicht vernetzt und in gewisser Weise "gehärtet" wird, und wodurch sich die Wärmformbeständigkeit dieser unteren Schicht erhöht. Danach erfolgen eine erneute Erwärmung der nun aus einer oberen geprägten Schicht und einer unteren elektronenstrahlvernetzten Schicht bestehenden Folie, sowie die anschließende Thermo-Formgebung in die bauteil-geometrische Form. Auf diese Weise wird eine " harte" tragende Unterschicht erzeugt, die die "weiche" geprägte Oberschicht bei der Thermoverformung abstützt und verhindert, dass die Narbung oder Prägung auf der oberen Schicht verfließt oder unzulässig verformt wird.

Neben den oben bereits geschilderten Problemen bei der Herstellung der Prägung / der Narbe ist es bei diesem Verfahren von Nachteil, das die notwendige Aneinanderreihung mehrerer Verfahrensschritte (Erhitzen - Präge - Vernetzen - Erhitzen - Verformen) zu einem relativ aufwendigen Produktionsveifahren führt. Darüber hinaus erfordert auch das Rohmaterial, eine Kunststofffolie aus den genannten unterschiedlichen Kunststoffschichten, eine relativ aufwendige Herstellung.

Die Aufgabe der Erfindung bestand also darin, ein kostengünstiges Herstellungsverfahren für Kunststoff-Formteile durch das narbgebendes Negativtiefziehen bereitzustellen, welches eine Aufheizung der eingesetzten Folie bis auf die zur Umformung und Oberflächeprägung niedrige Schmelzeviskosität erlaubt, ohne dass die Folienstabilität zu gering wird und die Folie während des Aufheizzyklus sich längt und z. B. merkbar durchhängt, welches zudem eine gute Abformbarkeit auch komplizierter Oberflächenstrukturen oder -narben im Tiefziehwerkzeug erlaubt, und welches lediglich eine minimale Anzahl von Verfahrensschritten erfordert.

Gelöst wird diese Aufgabe durch die Merkmale des Hauptanspruchs. Vorteilhafte Weiterbildungen sind in den Unteransprüchen enthalten. Ebenfalls offenbart ist ein Kunststoff-Formteil, welches dem Verfahren in besonderer Weise Rechnung trägt.

Hierbei wird das Kunststoff-Formteil während oder vor der Vorwärmung und dem Tiefziehen bzw. der Oberflächenprägung einer Elektronenstrahlvernetzung unterworfen, die im Wesentlichen nur die Teile des Kunststoff-Formteiles vernetzt, die der späteren Narbseite abgewandt sind und somit nicht oder nur in geringem Ausmaß mit der dreidimensionalen Oberflächenstruktur versehen bzw. geprägt werden. Durch die Vernetzung der genannten Folienbereiche, d.h. im Wesentlichen des mittleren und unteren Bereiches des Kunststoff-Formteiles / Folienbereichs unterhalb der danach aufzubringenden Narbung, wird die Schmelzeviskosität in diesen Bereich derart reduziert, dass der Foliendurchhang fast beliebig einzustellen ist.

Die Vernetzung von Polymeren entsteht durch Ausbildung kovalenter Bindungen zwischen den Polymerketten. Üblicherweise erfolgt die Vernetzung durch die klassische Vulkanisation mit elementarem Schwefel oder Silanen, durch die Peroxidvernetzung, durch die Vernetzung mit Elektronenstrahlen, oder durch eine Kombination der Verfahren. Bei der Elektronenstrahlenvemetzung entstehen die den Vernetzungsprozess startenden Radikale durch die Einwirkung energiereicher Strahlung auf die Polymermoleküle. Dabei gehen die beschleunigten Elektronen Wechselwirkungen mit den bestrahlten Molekülen ein. Durch elastische Stöße wird die kinetische Energie der Elektronen auf Atome des Molekülverbundes übertragen. Die betroffenen Atome werden dadurch in einen höheren Anregunaszustand überführt. Ist die so zugeführte Energie größer als die Bindungsenergie der kovalenten Bindungen, so wird die Bindung gespalten und es entstehen Radikale, Makroradikale und Ionen.

Die Radikale reagieren in Folgereaktionen mit den Molekülen der Polymerketten oder sich selbst und führen sowohl zur Ausbildung kovalenter Bindungen zwischen den einzelnen Ketten, als auch zum Abbau der Makromoleküle durch Kettenspaltung. Kettenspaltung und Kettenaufbau laufen parallel. Es hängt dabei vom verwendeten Polymertyp und den Verarbeitungsbedingungen wie Strahlendosis, Art der Strahlung, Temperatur, etc. ab, welche Reaktion dominiert. Die Einstellung der Verfahrensparameter bei der Elektronenstrahlvernetzung ist daher von elementarer Wichtigkeit. Da auch ein Kettenabbau stattfindet, ist eine Vernetzung aller vorhandenen Polymerketten miteinander nicht realisierbar. Obwohl durch Strahlenvernetzung eine vollständige Vernetzung nicht ereicht wird, werden dennoch Hauptmerkmale der bestrahlten Polymere stark beeinflusst.

Die bei einer durch Elektronenstrahlen induzierten Vernetzung neu entstandenen Vernetzungsstellen behindern den Faltvorgang der Polymerketten. Dadurch kommt es zu einer Erniedrigung des Kristallinitätsgrades, wobei insbesondere die mechanische Festigkeit und Sprödigkeit mit sinkendem Kristallinitätsgrad abnehmen, während Zähigkeit und Dämpfungseigenschaften zunehmen. Tatsächlich tritt in den meisten Fällen jedoch eine durch die Erniedrigung des Kristallinitätsgrades zu erwartende Abnahme der Festigkeit nicht auf. Der Grund hieifür ist, dass die geringere Kristallinität durch die gesteigerte Strukturfestigkeit der vernetzten amorphen Beeiche überkompensieil wird. Die Kohäsionskräfte zwischen den vernetzten Polymerkettensegmenten sind um ein Vielfaches größer als im unvernetzten Zustand, wo lediglich van der Waalsche Wechselwirkungskräfte zwischen den Kette wirken. Das Abgleiten und Verlagern der Polymerketten wird durch das Vernetzen wesentlich erschwert. Diese Veränderungen äußern sich beispielsweise durch eine Zunahme der mechanischen Festigkeit und der Wärmeformbeständigkeit.

Eine über die Foliendicke inhomogene Verteilung der neu entstandenen Vernetzungsstellen, also der Vernetzunasdichteverteiluna oder Netzbogendichte - beispielsweise ausgedrückt durch den Gelgehalt als bekanntes Maß für die Vernetzung - kann dadurch ereicht werden, dass die Folie sowohl von einer Seite als auch von beiden Seiten einer Elektronenstrahlung ausgesetzt werden.

Bei einer einseitigen Bestrahlung kann dabei durch die Wahl der Beschleunigungsspannung für die Elektronen abhängig von der Foliendicke der Bereich der maximalen Dosisadsorption variiert und damit bei die Vernetzungsdichtevelieilung definiert werden.

Im Falle der zweiseitigen Bestrahlung lässt sich die Vernetzungsdichteverteilung darüber hinaus durch die Relation der aufgebrachten Dosen unter Variation der jeweiligen Beschleunigungsspannung beeinflussen. Abhängig von den jeweiligen Zusammensetzungen der zu bestrahlenden Folien, sind diese für jedes chemische System neu anzupassen.

Durch Einstellung der Vernetzunasparameter bei der Elektronenstrahlvernetzung ist es daher möglich, primär z.B. den Teil der Folie, der im Tiefzieh-Verfahren nicht genarbt wird, zu vernetzen. Es kann hierbei geschehen, dass der untere Teil der Folie in einem geringen Ausmaß ebenfalls vernetzt wird, jedoch sind die in den unteren Bereichen gebildeten Vernetzungen so gering, dass die Abformbarkeit der im Tiefzieh-Werkzeug eingebrachten Narbstruktur nicht eingeschränkt wird.

Eine vorteilhafte Ausbildung besteht darin, dass das Kunststoff-Formteil als Schichtkörper aus einer oder mehreren Kunststofffolien ausgebildet ist, die jeweils eine Dicke von 0,4 bis 4 mm aufweisen. Hierdurch wird die Einstellbarkeit der Vernetzungstiefe weiter erleichtert.

Eine weitere Vereinfachung in der Herstellung des Rohmaterials besteht darin, dass die Kunststofffolien gleiche polymere Zusammensetzung aufweisen, was wiederum die Herstellung des Grundmaterials wesentlich vereinfacht und kostenminimal durchführbar werden lässt.

Die Vernetzung der Folie wird vorteilhafterweise so eingestellt, dass die mit der späteren Oberflächenstruktur zu prägende Hälfte der Folienbahn einen Gelgehalt von höchstens 20 % aufweist, vorzugsweise einen Gelgehalt von 3 bis 15 %. Dies wird insbesondere dadurch unterstützt, dass Folie insgesamt einen Gelgehalt von 5 bis 60 % aufweist, vorzugsweise 5 bis 40 %, und dass die Differenz des Gelgehalts zwischen der oberen der unteren Folienhälfte mindestens 5 %, vorzugsweise 10 % beträgt. Damit ist die Viskosität der an der der Oberfläche der Negativform zugewandten Bereiche der Folie ausreichend niedrig, um eine gute Prägung der Oberflächenstruktur /Narbstruktur zu em-eichen, wobei die den höheren Gelgehalt aufweisende andere Hälfte der Folie genügend Festigkeit bereitstellt, um eine prozesssichere Herstellung zu ermöglichen.

Die Bestimmung des Gelgehalts erfolgt üblicherweise über eine Extraktionsmethode, bei der zunächst Proben bei einer Dicke von etwa 0,5 mm in Quadrate einer Kantenlänge von etwa 1,0 mm geschnitten werden. Die Proben (etwa 100 mg) werden dann in Reagenzgläsern vorgelegt, welche mit Pfropfen aus rostfreiem Stahldraht versehen sind, die ein Aufschwimmen der Proben verhindern. Die Reagenzgläser werden mit 100 ml Xylol gefüllt und mit Alufolie verschlossen, um ein Abdampfen des Lösungsmittels zu verhindern. Das Xylol wird dann zum Sieden erhitzt. Die Probekörper lässt man etwa 24 h im siedenden Xylol. Anschließend wird das Gel-Xylol-Gemisch über eine Siebtrommel mit einer Maschenweite von 200 mesh filtriert, wobei das Gel in der Siebtrommel verbleibt. Die Siebtrommeln werden auf Metallplatten gestellt und bei 140°C für 3 h im Umluftofen getrocknet. Nach Abkühlen auf Raumtemperatur wird der Gehalt ausgewogen und zur Einwaage ins Verhältnis gesetzt.

In besonderer Weise geeignet bei der Nutzung des erfindungsgemäßen Herstellungsverfahrens ist ein Kunststoff-Formteil mit einer dreidimensionalen Oberflächenstruktur, insbesondere Polymer-Formhaut oder -Folie mit einer Narbung auf der Oberfläche, wobei das Kunststoff-Formteil zunächst einer Vorwärmung bis auf eine Temperatur unterzogen wird, bei dem das Kunststoff-Formteil thermoplastisch verformbar wird, und bei dem das Kunststoff-Formteil danach mittels Unterdruck und/oder Formwerkzeugen in/auf eine Negativform gepresst wird, wobei die Oberfläche der Negativform das Negativ der aufzubringenden dreidimensionalen Oberflächenstruktur beinhaltet, wodurch das Kunststoff-Formteil sowohl die gewünschte geometrische / bauteil-geometrische Form erhält als auch mit der gewünschten positiven Oberflächenstruktur geprägt wird, wobei dass das Kunststoff-Formteil mindestens eine Kunststoffschicht aufweist, welche vor der Vorwärmung und dem Tiefziehen bzw. der Oberflächenprägung einer Elektronenstrahlvernetzung unterworfen wird, wobei die Kunststoffschicht im Wesentlichen in den Bereichen vernetzt ist, die der späteren Narbseite abgewandt sind und somit nicht oder nur teilweise eine geprägte dreidimensionalen Oberflächenstruktur aufweisen, wobei das Kunststoff-Formteil aus einem thermoplastischen Elastomer, insbesondere einem thermoplastischen Olefin besteht.

Der besondere Vorteil der Nutzung dieser Polymerart bei dem erfindungsgemäßen Kunststoff-Formteil besteht darin, dass die ursprünglich vorhandene intermolekulare Vernetzung eines thermoplastischen Olefins (Wasserstoffbrücken, kristalline Strukturen) dominierend thermoreversibel und im Wesentlichen physikalischer Natur ist, was im Hinblick auf die Eignung für das Prägeverfahren grundlegend ist. Die "zusätzliche" Elektronenstrahlvernetzung bestimmter Schichten des Polyolefins stellt die besondere und überraschende Eigenschaft des Rohmateriales bereit, bei der nach Erwärmung einerseits ein für die Prägung erforderliches thermoplastisches Verhalten und andererseits eine ausreichende Wärmeformbeständigkeit zur prozesssicheren Werkstoffhandhabung vorliegt. Hierdurch ist auch erst die Verwendung von Folien nur eines Werkstoffes, also einer "einschichtigen Folie" möglich.

Vorteilhafterweise besteht das Kunststoff-Formteil aus vernetzten polymeren Materialen, insbesondere aus einer Zusammensetzung von Polypropylen, Polyethylen sowie deren Copolymeren und Terpolymeren. Hierdurch ergibt sich sowohl eine besondere Eignung für das Herstellveifahren als auch für die Anwendung als z. B. genarbter Formkörper für Kraftfahrzeuginterieur.

Eine weitere vorteilhafte Ausbildung besteht darin, dass das Kunststoff-Formteil als Polymerfolie oder als mehrschichtiger Polymerfolienverbund ausgebildet ist, wobei die Bestandteile der Polymeifolien vorzugsweise aus Polyolefinen bestehen.

Das Spektrum der eingesetzbaren Polyolefine unterliegt dabei keiner prinzipiellen Einschränkung. Verwendet werden können vorzugsweise Polyolefine wie PP, PE, Poly(1-buten), Polyisobutylen, Poly(4-methylpenten), PP-Copolymere oder -Terpolymere mit C₂, C₄-C₁₂-α-Olefinen, PE-Copolymere oder -Terpolymere mit C₃ bis C₁₂-α-Olefinen oder Mischungen daraus, wobei als Co- oder Termonomer auch Dien-Monomere eingesetzt werden können, die nicht-konjugierte Doppelbindungen enthalten, wie z.B. 1,4-Hexadien, 5-Methyl-1,5-Hexadien, 5-Ethyliden-2-Norbonen, 5-Butyliden-2-Norbonen, Dicylopentadien, 1,4-Octadien, Cyclohexadien oder Cyclooctadien; Copolymere von Propylen und/oder Ethylen mit polaren Comonomeren wie Acrylsäure und/oder deren C₁-C₁₂-Estern, Methacrylsäure und/oder deren C₁-C₁₂-Estern, Ionomere auf Basis von Acrylsäure und/oder mit Methacrylsäure sowie Schwefelsäure, Vinylestern gesättigter C₁-C₈-Carbonsäuren, wahlweise mit Kohlenmonoxid als Termonomer; Pfropfcopolymere von Propylen und/oder Ethylen mit 8-45 % aufgepfropften Einheiten von ungesättigten Carbonsäuren, Dicarbonsäuren, deren Estern und/ oder Anhydriden sowie Gemische der genannten Polymere.

Eine weitere vorteilhafte Ausbildung besteht darein, dass die Polymerfolie oder der mehrschichtige Polymerfolienverband als unterste Schicht eine Schaumschicht aufweist, insbesondere aus Polyolefinschaum. Hierdurch werden weitere Anwendungsgebiete erreichbar, insbesondere solche, bei denen z. B. ein weicher Überzug auf einen Formkörper kaschiert werden soll.

Eine weitere vorteilhafte Ausbildung besteht darin, dass das Kunststoffformteil mindestens in seinem der Oberfläche der Negativform abgewandten Bereich mit einem Vernetzungshilfsmittel versehen ist, vorzugsweise mit Acrylaten von einweiligen Alkoholen oder Methacrylaten von ein- oder mehrwertigen Alkoholen. Dies gilt insbesondere für Polyolefine, bei denen die Kettenspaltung, die als Konkurrenzreaktion zur Vernetzung abläuft, eine merkliche Auswirkung zeigt. Betroffen sind insbesondere Polyolefine mit tertiären und quartären C-Atomen.

Eine weitere vorteilhafte Ausbildung besteht darin, dass das Vernetzungshilfsmittel ein Trimethylolpropantriacrylat, Trimethylolpropantrimethacrylat, Triallylcyanurat oder Divinylbenzol ist. Auch vinylfunktionelle Komponenten, wie Styrol und Divinylbenzol, Allyl-Verbindungen wie Triallylcyanurat, Triallylisocyanat, Ethylenglycoldimethacrylat, Diethylenglykoldimethacrylat und/oder Polyethylenglykoldimethacrylat sind hier geeignet, um eine genaue und angepasste Vernetzung zu erreichen.

Eine weitere vorteilhafte Ausbildung besteht darin, dass die Menge an eingesetztem Vernetzungshilfsmittel in der jeweiligen Folienlage weniger als 10 Gew.-% beträgt, insbesondere weniger als 5 Gew.-%, in einer weiteren bevorzugten Ausführung weiniger als 2 %. Diese differenzierten Zugaben von Vernetzungshilfsmitteln sind wichtig, um den unterschiedlichen Folienzusammensetzungen, d.h. den unterschiedlichen Polymeren Rechnung zu tragen. So wird bei einem hohen Anteil von an sich gut vernetzendem Kautschuk der Anteil an Vernetzungshilfsmittel eher bei ca. 1,5 % liegen, während bei einem hohen Anteil an eher schlecht vernetzendem Polypropylen ein entsprechend höherer Anteil von Vernetzungshilfsmittel vorzusehen ist.

Die nachfolgenden Tabellen zeigen anhand von Vergleichsbeispielen die vorteilhafte Wirkung des erfindungsgemäßen Verfahrens bzw. die Vorteile des erfindungsgemäßen Kunststoff-Formteiles. Der obere Bereich der aus thermoplastischer Folie bestehenden Kunststoff-Formteiles wird anschließend mit den in Tabelle 3 beschriebenen Dosen in einem Elektronenstrahlvernetzer bestrahlt, wobei die Folie im Wesentlichen in den Bereichen vernetzt ist, die der späteren Narbseite abgewandt sind.

Das Vergleichsbeispiel 1 beschreibt eine Folienkonstruktion, die sich im "Inmould-Graining-Verfahren" d.h. im narbgebenden Negativtiefziehen aufgrund ihrer geringen Wärmeformfestigkeit sehr gut in einer die Narbstruktur und Bauteilgeometrie als Negativ aufweisender Werkzeugform mit der gewünschten Narbe prägen lässt. Allerdings weist die Folie bei auf 200°C erfolgender Vorwärmung einen zu großen Durchhang auf (größer 100 mm), dass es beim narbgebenden Negativtiefziehen vielfach zur Faltenbildung kommt.

Der Durchhang im Vergleichsbeispiel 2 liegt dagegen im gewünschten Bereich von maximal 100 mm. Allerdings verschwindet die eingebrachte Narbe bei der gewählten, für das Kfz-Interieur typischen Wärmelagerungstemperatur. Grund dafür ist der zu hohe Gelgehalt der Folie, der den so genannten Memoiyeffekt induziert, wodurch die Polymerketten wieder ihre Position vor der Narbabformung einnehmen.

Einzig die erfindungsgemäßen Folien und Verfahrenausprägungen der Ausführungen 1 und 2 kombinieren eine gute Narbabformung mit geringem Foliendurchhang und sehr guter Wärmestabilität der Narbe.

### Eingesetzte Polymere

- TPO:: Thermoplastisches Elastomer (unvernetzt), Dichte 0,89 g/ml MFI 1g/10 min (230°C, 2,16 kg)
- r-PP:: Random Copolymeres Polypropylen, Dichte 0,90 g/ml, MFI 1g/10 min (230°C, 2,16 kg)
- LLDPE:: Linear low denisty Polyethylen, Dichte 0, 92 g/ml, MFI 1g/10 min (190°C, 2,16 kg)
- VLDPE:: Very low density Polyethylen Dichte 0, 87 g/ml, MFI 1 g/10 min (190°C,02,16 kg)
- EPDM:: Ethylen-Propylen-Dien-Mischpolymer, Dichte 0,89 g/ml, Diengehalt ca. 1 Gew.%

**Tabelle 1**

| Folienzusammensetzungen (Gewichtsanteile) | | | | |
|---|---|---|---|---|
| | Vergleichsbeispiel 1 | Vergleichsbeispiel 2 | Ausführung 1 | Ausführung 2 |
| TPO | 75 | 75 | 40 | |
| r-PP | | | | 30 |
| LLDPE | | | 20 | 10 |
| VLDPE | 25 | 25 | | 50 |
| EPDM | | | 40 | 10 |

**Tabelle 2**

| Vergleichsbeispiele und erfindungsgemäße Ausführung | | | | |
|---|---|---|---|---|
| | Vergleichsbeispiel 1 | Vergleichsbeispiel 2 | Ausführung 1 | Ausführung 2 |
| Ober folie Dosis [Kmy] | 0 | 40 | 40 | 40 |
| Beschleunigungs-Spannung | / | 400 KV einseitig | 650 KV einseitig | 900 KV einseitig |
| Abformbarkeit der Narbe 1 min, 170°C 10 sehr gut,50 schlecht | 1 | 5 | 2 | 1 |
| Durchhang 2 min, 200°C | 145 mm | 80 mm | 82 mm | 85 mm |
| Gelgehalt (%) -insgesamt | 0 | 23 % | 30 % | 22 % |
| -obere Folienhälfte | 0 | 23% | 10% | 8% |
| Erscheinungsbild Narbe nach 24 h, 120 °C | i.O | Narbe verflacht | i.O | i.O |

## Patentansprüche

1. Verfahren zu Herstellung von Polymer-Formhäuten oder -Folien mit einer Narbung auf der Oberfläche in Form von warmformbaren und werkzeugfallenden Kunststoff Formteilen mit einer dreidimensionalen Oberflächenstruktur, wobei das Kunststoff-Formteil einer Vorwärmung bis auf eine Temperatur unterzogen wird, bei dem das Kunststoff-Formteil thermoplastisch verformbar wird, und bei dem das Kunststoff-Formteil danach mittels Unterdruck und/oder Formwerkzeugen in/auf eine Negativform gepresst wird, wobei die Oberfläche der Negativform das Negativ der aufzubringenden dreidimensionalen Oberflächenstruktur beinhaltet, wodurch das Kunststoff Formteil sowohl die gewünschte geometrische Form erhält als auch mit der gewünschten positiven Oberflächenstruktur geprägt wird, **dadurch gekennzeichnet, dass** das Kunststoff-Formteil während oder vor der Vorwärmung und dem Tiefziehen bzw. der Oberflächenprägung einer Elektronenstrahlvernetzung unterworfen wird, die im Wesentlichen nur die Teile des Kunststoff-Formteiles vernetzt, die der späteren Narbseitc abgewandt sind und somit nicht oder nur in geringem Ausmaß mit der dreidimensionalen Oberflächenstruktur versehen bzw. geprägt werden.

2. Verfahren nach Anspruch 1, **dadurch gekennzeichnet, dass** das Kunststoff Formteil als Schichtkörper aus einer oder mehreren Kunststofffolien ausgebildet ist, die jeweils eine Dicke von 0,4 bis 4 mm aufweisen.

3. Verfahren nach Anspruch 1 oder 2, **dadurch gekennzeichnet, dass** die Kunststofffolien gleiche polymere Zusammensetzung aufweisen.

4. Verfahren nach Anspruch 1 bis 3, **dadurch gekennzeichnet, dass** die mit der späteren Oberflächenstruktur zu prägende Hälfte der Folienbahn einen Gelgehalt von höchstens 20 % aufweist, vorzugsweise einen Gelgehalt von 3 bis 15 %.

5. Verfahren nach Anspruch 4, **dadurch gekennzeichnet, dass** Folie insgesamt einen Gelgehalt von 5 bis 60 % aufweist, vorzugsweise 5 bis 40 %

6. Verfahren nach Anspruch 4 oder 5, **dadurch gekennzeichnet, dass** die Differenz des Gelgehalts zwischen der oberen der unteren Folienhälfte mindestens 5 %, vorzugsweise 10 % beträgt.

7. Verfahren nach einem oder mehreren der ansprüche 1 bis 6, bei dem das Kunststoff-Formteil aus einem thermoplastischen Elastomer, insbesondere einem thermoplastischen Olefin oder einer Polyolefinmischung besteht.

8. Verfahren nach Anspruch 7, bei dem das Kunststoff-Formteil aus vernetzten polymeren Materialen besteht, insbesondere aus einer Zusammensetzung von Polypropylen, Polyethylen, sowie deren Copolymeren und Terpolymeren, insbesondere zur Verwendung als Formkörper für Kraftfahrzeuginterieur.

9. Verfahren nach Anspruch 7 oder 8, beidem das Kunststoff-Formteil als Polymerfolie oder als mehrschichtige Polymerfolienverband ausgebildet ist, wobei die Bestandteile der Polymerfolien vorzugsweise aus Polyolefinen bestehen.

10. Verfahren nach Anspruch 7 bis 9, bei dem die Polymerfolie oder der mehrschichtige Polymerfolienverband als unterste Schicht eine Schaumfolie aufweist, insbesondere aus Polyolefinschaum.

11. Verfahren nach Anspruch 7 bis 10, bei dem das Kunststoffformteil mindestens in seinem der Oberfläche der Negativform abgewandten Bereich mit einem Vernetzungshilfsmittel versehen ist, vorzugsweise mit Acrylaten von einwertigen Alkoholen oder Methacrylaten von ein- oder mehrwertigen Alkoholen

12. Verfahren nach Anspruch 11, bei dem das Vernetzungshilfsmittel Trimethylolpropantriacrylat, Trimethylolpropantrimethacrylat, Triallylcyanurat oder Divinylbenzol ist.

13. Verfahren nach Anspruch 11 oder 12, bei dem die Menge an eingesetztem Vermetzungshilfsmittel in der jeweiligen Folienlage weniger als 10 Gew.-% beträgt, insbesondere weniger als 5 Gew.%.

14. Verfahren nach Anspruch 13, bei dem die Menge an eingesetztem Vernetzungshilfsmittel in der jeweiligen Folienlage weniger als 2 Gew.-% beträgt.

## Claims

1. Process for the production of molded polymer skins or, respectively, foils with a grain on the surface in the form of thermoformable plastics moldings coming directly from the mold with a three-dimensional surface structure, where the plastics molding is subject to preheating up to a temperature where the plastics molding becomes capable of thermoplastic deformation, and where the plastics molding is then pressed into/onto a female tool by means of subatmospheric pressure and/or of molding tools, where the surface of the female tool comprises the negative of the three-dimensional surface structure to be applied, the result being that the plastics molding not only receives the desired geometric shape but also is embossed with the desired positive surface structure, **characterized in that** the plastics molding is, during or prior to the preheating and the thermoforming or the surface embossing process, subjected to electron-beam crosslinking, which in essence crosslinks only those parts of the plastics molding which face away from the subsequent grain side and which therefore are not, or only to a small extent, embossed or provided with the three-dimensional surface structure.

2. Process according to Claim 1, **characterized in that** the plastics molding is a layered product composed of one or more plastics foils, the thickness of each of which is from 0.4 to 4 mm.

3. Process according to Claim 1 or 2, **characterized in that** the polymeric constitution of the plastics foils is identical.

4. Process according to any of Claims 1 to 3, **characterized in that** the gel content of that half of the foil web intended for embossing with the subsequent surface structure is at most 20%, preferably from 3 to 15%.

5. Process according to Claim 4, **characterized in that** the total gel content of the foil is from 5 to 60%, preferably from 5 to 40%.

6. Process according to Claim 4 or 5, **characterized in that** the difference in the gel content between the upper and lower half of the foil is at least 5%, preferably 10%.

7. Process according to one or more of Claims 1 to 6, in which the plastics molding is composed of a thermoplastic elastomer, in particular of a thermoplastic olefin, or of a polyolefin mixture.

8. Process according to Claim 7, in which the plastics molding is composed of crosslinked polymeric materials, in particular of a composition of polypropylene or of polyethylene, or of their copolymers and terpolymers, in particular for the use as a molding for motor vehicle interiors.

9. Process according to Claim 7 or 8, in which the plastics molding is a polymer foil or a multilayer polymer foil composite, where the constituents of the polymer foils are preferably composed of polyolefins.

10. Process according to any of Claims 7 to 9, in which the polymer foil or the multilayer polymer foil composite has, as undermost layer, a foam foil, in particular composed of polyolefin foam.

11. Process according to any of Claims 7 to 10, in which the plastics molding has been provided, at least in its region facing away from the surface of the female tool, with a crosslinking aid, preferably with acrylates of monohydric alcohols or with methacrylates of mono- or polyhydric alcohols.

12. Process according to Claim 11, in which the crosslinking aid is trimethylolpropane triacrylate, trimethylolpropane trimethacrylate, triallyl cyanurate, or divinylbenzene.

13. Process according to Claim 11 or 12, in which the amount of crosslinking aid used in the respective foil sublayer is less than 10% by weight, in particular less than 5% by weight.

14. Process according to Claim 13, in which the amount of crosslinking aid used in the respective foil sublayer is less than 2% by weight.

## Revendications

1. Procédé de fabrication de feuilles ou peaux moulées polymères ayant un grain sur la surface sous la forme de pièces moulées plastiques thermoformables et sorties de l'outil ayant une structure de surface tridimensionnelle, la pièce moulée plastique étant soumise à un préchauffage jusqu'à une température à laquelle la pièce moulée plastique est déformable thermoplastiquement, et la pièce moulée plastique étant ensuite comprimée par une sous-pression et/ou des outils de moulage dans/sur un moule négatif, la surface du moule négatif contenant le négatif de la structure de surface tridimensionnelle à appliquer, la pièce moulée plastique présentant ainsi la forme géométrique souhaitée et étant gravée avec la structure de surface positive souhaitée, **caractérisé en ce que** la pièce moulée plastique est soumise à une réticulation par un faisceau d'électrons pendant ou avant le préchauffage et l'emboutissage ou la gravure de surface, qui ne réticule essentiellement que les parties de la pièce moulée plastique qui sont détournées du côté grainé ultérieur et qui ne sont par conséquent pas ou seulement dans une faible mesure munies de ou gravées avec la structure de surface tridimensionnelle.

2. Procédé selon la revendication 1, **caractérisé en ce que** la pièce moulée plastique est configurée sous la forme d'un corps stratifié constitué d'une ou de plusieurs feuilles plastiques, qui présentent chacune une épaisseur de 0,4 à 4 mm.

3. Procédé selon la revendication 1 ou 2, **caractérisé en ce que** les feuilles plastiques présentent une composition polymère identique.

4. Procédé selon les revendications 1 à 3, **caractérisé en ce que** la moitié à graver avec la structure de surface ultérieure de la bande de feuille présente une teneur en gel d'au plus 20 %, de préférence une teneur en gel de 3 à 15 %.

5. Procédé selon la revendication 4, **caractérisé en ce que** la feuille présente au total une teneur en gel de 5 à 60 %, de préférence de 5 à 40 %.

6. Procédé selon la revendication 4 ou 5, **caractérisé en ce que** la différence de la teneur en gel entre la moitié supérieure et inférieure de la feuille est d'au moins 5 %, de préférence de 10 %.

7. Procédé selon une ou plusieurs des revendications 1 à 6, dans lequel la pièce moulée plastique est constituée d'un élastomère thermoplastique, notamment d'une oléfine thermoplastique ou d'un mélange de polyoléfines.

8. Procédé selon la revendication 7, dans lequel la pièce moulée plastique est constituée de matériaux polymères réticulés, notamment d'une composition de polypropylène, polyéthylène, ainsi que leurs copolymères et terpolymères, notamment pour l'utilisation en tant que corps moulé pour l'intérieur d'automobiles.

9. Procédé selon la revendication 7 ou 8, dans lequel la pièce moulée plastique est configurée sous la forme d'une feuille polymère ou sous la forme d'un ensemble de feuilles polymères multicouche, les constituants des feuilles polymères étant de préférence constitués de polyoléfines.

10. Procédé selon les revendications 7 à 9, dans lequel la feuille polymère ou l'ensemble de feuilles polymères multicouche comprend en tant que couche inférieure une feuille de mousse, notamment en mousse de polyoléfine.

11. Procédé selon les revendications 7 à 10, dans lequel la pièce moulée plastique est munie au moins dans sa zone détournée de la surface du moule négatif d'un adjuvant de réticulation, de préférence d'acrylates d'alcools monovalents ou de méthacrylates d'alcools mono- ou polyvalents.

12. Procédé selon la revendication 11, dans lequel l'adjuvant de réticulation est le triacrylate de triméthylolpropane, le triméthacrylate de triméthylolpropane, le cyanurate de triallyle ou le divinylbenzène.

13. Procédé selon la revendication 11 ou 12, dans lequel la quantité d'adjuvant de réticulation utilisé dans la couche de feuille respective est inférieure à 10% en poids, notamment inférieure à 5% en poids.

14. Procédé selon la revendication 13, dans lequel la quantité d'adjuvant de réticulation utilisé dans la couche de feuille respective est inférieure à 2% en poids.
